# EUROPEAN PATENT APPLICATION

(11) **EP 3 450 796 A1**
(43) Date of publication of application: **06.03.2019**
(21) Application number: 16900318.3
(22) Date of filing: 29.04.2016
(51) Int. Cl.: F16F 15/02

(54) **ANTI-VIBRATION SUPPORT SYSTEM**

(71) Applicant: Tejasa-TC, S.L.L., 39610 El Astillero (ES)
(72) Inventor: MARTÍN HERNÁNDEZ, Juan José, 39610 El Astillero (Cantabria) (ES); PÉREZ NÚÑES, Alejandro, 39610 El Astillero (Cantabria) (ES); SAPIÑA FIGOLS, Emilio, 39610 El Astillero (Cantabria) (ES)
(74) Representative: García Gómez, José Donato
(86) International application number: PCT/ES2016/070334
(87) International publication number: WO 2017/186979

(57) **Abstract**

Anti-vibration support system, applicable to the protection of constructions or various equipment against forces and accelerations produced by an earthquake or vibrating waves of any nature, and to the protection of buildings against possible vibrations that said equipment may produce during its operation; comprising: a first mount (1, 1a) anchored to a supporting surface and provided with side walls (11); a floating mount (2, 2a) having side walls (21) provided with at least first faces (211), internally or externally facing the side walls (11) of the first fixed mount (1, 1a); which floating mount (2) is mounted on anti-vibration bases (3) for limitation and damping of the vertical movement of the floating mount (2, 2a); and first anti-impact side stop buffers (4) for limitation and damping of the horizontal movement of the floating mount (2)

## Description

### Object of the invention

The present invention, as indicated in the title, relates to an anti-vibration support system, applicable to the protection of constructions or various equipment against forces and accelerations produced by an earthquake or vibrating waves of any nature, and to the protection of buildings against possible external vibrations that may affect their internal equipment during its operation.

### Technical field of the invention

This invention is designed to minimise the transmission of movements and vibrations between a floor or fixed resting surface and equipment, appliances or machines mounted on the anti-vibration support system and, especially, for the protection of equipment, computers and electronic components in data processing centres, DPC, used by, for example, large companies, organisations or military institutions for the storage and conservation of data. It is also applicable to laboratories and, in general, to any facility with computers or sensitive material for their protection from vibrations produced by earthquakes, accidental impacts, nearby train traffic, or any other cause.

### State of the art

Various protection systems for constructions against seismic forces which seek to isolate the construction and/or its structural elements from the surface waves that occur during an earthquake are known. These waves are of different intensity and wavelength, acting on the constructions with forces in the vertical and horizontal direction.

A fundamental principle of isolation from seismic waves is knowing the structure's natural frequency, and achieving that this frequency is always lower than the exciting frequency of the seismic wave, because, in that case, it would enter into resonance and thus the forces and effects of the earthquake would multiply.

Floating floors or floating slabs of reinforced concrete, defined as an independent floor and at the same level as the rest of the concrete slab formwork, which is supported on a rigid base by elastic elements, usually helical dampers, are known in the state of the art. They are used to prevent transmission of vibrations or noises produced in the operation of the devices or machines placed on the slab to the rest of the building or structure.

The slabs are made in the reinforced concrete slab formwork, which is a concrete reinforced with a framework of welded wire fabric, generally composed of two meshes, each of which is formed by bars or rods arranged perpendicularly on the horizontal plane, crossing over each other forming grids; the meshes placed superposed one above the other, with a certain separation, making the respective grids coincide. For the forming of the floating slab a series of containers are placed in the ground, whose bases have proportions smaller than the grid of the meshes, and at a height related to that which the slab will have, and arranged at regular distances to cover and configure the dimensions of the floating slab. The containers will be fixed by different means to the meshes to form an integral part of the slab formwork after the pouring and drying of the concrete.

In this regard, the applicant is the holder of the patent ES 2 315 182 B1, which provides the assembly of the meshes, and claims containers which have tubes in their walls at two different levels, tubes in which rods are inserted which protrude from the tubes upon which the bars of the first mesh are supported on the tubes of the lower level, and the bars of the second mesh on the tubes of the upper level.

To isolate the floating slab from the rest of the rigid slab formwork, several solutions are known: pouring liquid rubber into the top of the gap existing between the walls of the floating slab and the walls of the rest of the slab formwork; placing rock wool, etc.

The equipment making up the data protection centres, DPC, which are network connected servers or hard drive units for massive data storage, are located in cabinets or shelves, internationally called "racks", which are independent but in contact with each other at their sides, and they may be in the room in one or more rows, each row separated by one or more metres. These "racks" are usually placed on a raised access floor, which is a floor raised by pedestals from a support structure and is presented divided into tiles, its purpose being the array and concealment under this raised access floor of the wiring and ducts that these workplaces have.

To ensure the safety of this sensitive equipment and its components against earthquakes, the movements and vibrations that are transmitted from the foundation to the racks, where the computers are located, must be minimal.

The use of floating slabs to protect structures that are arranged on them from earthquakes is known, but it fails to carry out this function properly as the floating slabs known are designed to only avoid the transmission of vibrations produced by the machine or device located on the floating slab to the foundation.

These floating slabs are associated to construction processes, and do not constitute an optimal solution when it comes to achieving a two-way anti-vibration isolation between a supporting surface (floor, formwork) and equipment or constructions to be installed or implemented on the supporting surface.

### Description of the invention

The object of the invention is an anti-vibration support system intended to be placed on a fixed surface (floor, formwork or similar) and to support equipment or various installations, and that presents features aimed at minimising the transmission of vibrating, seismic or other waves from the fixed surface to the equipment mounted on the system, and at the same time, also minimising the transmission of vibrations possibly caused by the operation of the equipment to said fixed surface; so that said anti-vibration support allows minimising the transmission of vibrations and movements respectively between the fixed surface and the aforementioned equipment, both vertically and horizontally.

For this purpose, and in accordance with the invention, this anti-vibration support system comprises: - a first fixed mount anchored to a supporting surface and provided with side walls; a floating mount having side walls provided with at least first faces, internally or externally facing the side walls of the first fixed mount; whose floating mount is mounted on anti-vibration bases configured for limitation and damping of the vertical movement of the floating mount and; first anti-impact side stop buffers arranged horizontally between the first faces of the side walls of the floating mount and the side walls of the first fixed mount, configured to limit and damp movement of the floating mount in the horizontal direction.

Each anti-vibration base of the floating mount comprises: - a lower plate that incorporates levelling legs provided with elastic studs for contact on the fixed resting surface; -an upper plate fixed to the floating mount; - at least one helical spring mounted between the upper and lower plates and; - holding stems for the upper and lower plates with possibility of relative displacement of said upper and lower plates.

It has also been envisaged that at least a part of the anti-vibration bases between the upper and lower plates incorporates a two-way metallic pad anti-resonance stop, whose function is to prevent high oscillations of the helical springs, avoiding the effect of resonance in the case that a seismic wave has an exciting frequency in alignment with a natural frequency of the anti-vibration system. In this case, if there is resonance, said anti-resonance stop prevents the helical springs from being subjected to very strong and harmful oscillations.

In the event of a strong impact, which involves the release of a large amount of energy in a short period of time, the mentioned two-way pad is the first and most important barrier for the immediate dissipation of this energy before it completely damages the anti-vibration system of the floating mount.

In one embodiment of the invention the anti-vibration system comprises a second fixed mount anchored to the supporting surface and provided with side walls facing the second faces of the side walls of the floating mount, and second anti-impact side stop buffers arranged horizontally between the second faces of the side walls of the floating mount and the side walls of the fixed mount.

The combination of the anti-vibration base with the first, and optionally, second anti-impact side stop buffers provides the mount with highly effective protection against seismic waves and vertical movements and against possible horizontal movements or vibrations.

The fixed and floating mounts can be formed in different materials of a resistance suitable for the use for which they are intended, it preferably being envisaged that they are formed in concrete and/or steel.

In the case that said mounts are made of steel, it is envisaged that the side walls of the mounts are of adjustable length, the floating mount defining a variable and adjustable top surface according to the apparatuses or installations to be positioned thereon.

These and other features of the invention will become better understood in view of the exemplary embodiment shown in the accompanying figures.

With the features presented thereof the following is achieved:
- The limitation and damping of the vertical movements of the floating mount; and of the equipment or installations mounted thereon, through the action of the anti-vibration base upon which said floating mount is mounted;
- An increase in the vertical damping of the floating mount by means of the elastic studs of the anti-vibration bases, when the downward movement of the floating mount is approaching the compression capacity of the helical springs;
- The elimination and/or damping of the lateral movements of the floating mount, and of the equipment or installations mounted thereon, by means of the side anti-impact stop buffers, which progressively reduce the horizontal forces;
- The possibility of forming a floating mount of variable surface, suitable for the dimensions of the equipment or installations to be mounted on said floating mount, through the use of mounts with side walls of adjustable length.

### Description of the figures

In order to complement the description that is being carried out and with the purpose of facilitating the understanding of the features of the invention, the present description is accompanied by a set of drawings wherein, by way of a nonlimiting example, the following has been represented:
- Figure 1 shows a perspective view of an exemplary embodiment of the anti-vibration support system according to the invention, provided with a floating mount and a fixed mount, both made of metal.
- Figures 2, 3 and 4 are, each respectively, elevational, profile and top plan views of the anti-vibration support system of Figure 1.
- Figure 5 shows a top plan view of an embodiment variant of the anti-vibration support system provided with a floating mount and two fixed mounts.
- Figure 6 shows a top plan view of a second embodiment variant of the anti-vibration support system provided with a floating mount and a first fixed mount provided with side walls of adjustable length.

### Preferred embodiment of the invention

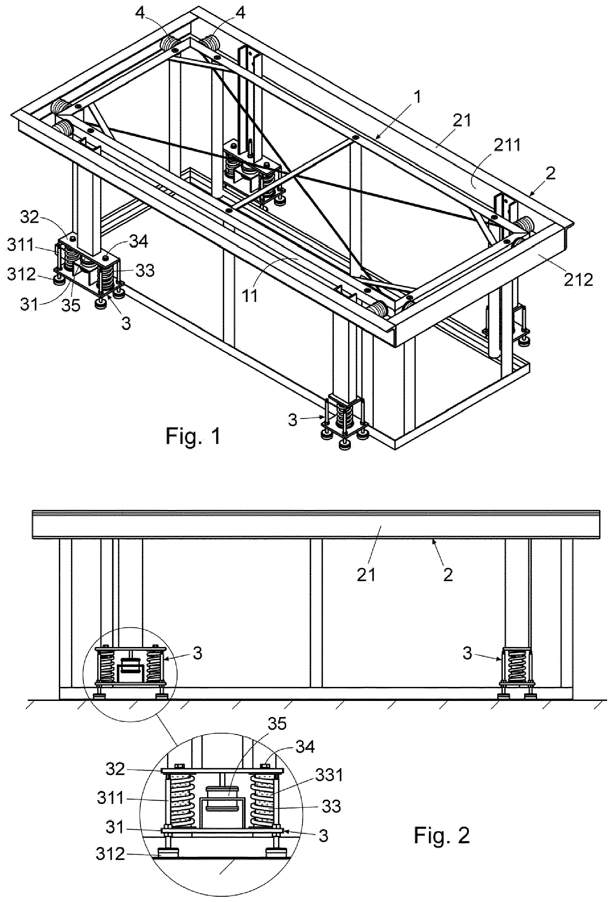

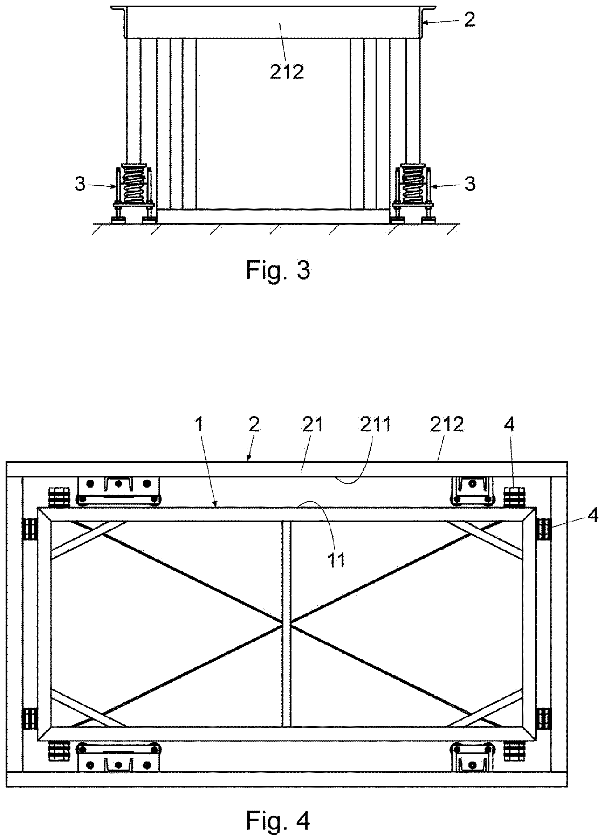

In the exemplary embodiment shown in Figures 1 to 4 the anti-vibration support system of the invention comprises a first fixed mount (1) provided with side walls (11) and anchored to a supporting surface, in this case the ground; and a floating mount (2) having side walls (21) provided with first faces (211), in this case exterior, facing the side walls (11) of said first fixed mount (1) and with opposite and interior second faces (212).

The floating mount (2) is mounted on anti-vibration bases (3) for limitation and damping of the vertical movements, and has first anti-impact side stop buffers (4) for limitation and damping of horizontal movements. Said side stop buffers (4) are arranged horizontally between the first faces (211) of the side walls (21) of the floating mount (2) and the side walls (11) of the first fixed mount (1). The aforementioned side stop buffers (4) are fixed to one of the (fixed or floating) mounts and slightly apart from the other (fixed or floating).

In the embodiment shown, the anti-vibration bases (3) comprise: a lower plate (31) mounted on adjustable levelling legs (311) provided with elastic studs (312) with which they are supported on a fixed resting surface and an upper plate (32) fixed to the floating mount (2), with helical springs (33) mounted between the two plates (31, 32) having in their interior damping pads (331) of stainless steel wire; said plates (31, 32) being interrelated by holding stems (34) that pass through the inside of the helical springs and allow a certain relative displacement of the upper and lower plates.

In the example shown, the floating mount (2) has a ring configuration; in the form of a quadrangular frame, in which the side walls are formed by steel profiles.

As can be seen more clearly in Figures 1 and 2, some of the anti-vibration bases (3) further comprise between the plates (31, 32) a two-way metallic pad anti-resonance stop (35).

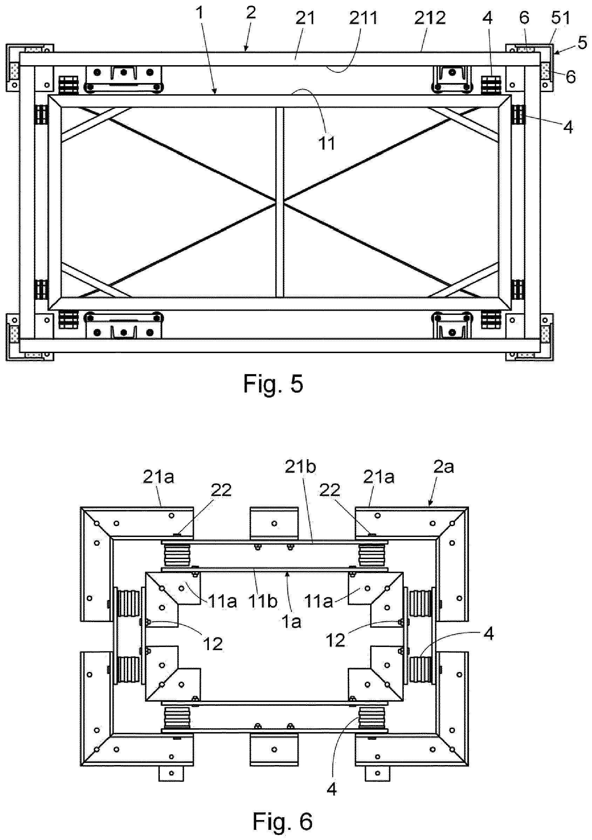

In the example shown in Figure 5, the anti-vibration system further comprises: a second fixed mount (5) anchored to the ground or supporting surface and provided with side walls (51) facing the second faces (212) of the side walls (21) of the floating mount (2), and second anti-impact side stop buffers (6) arranged horizontally between the second faces (212) of the side walls (21) of the floating mount (2) and the side walls of the second fixed mount (5).

In said exemplary embodiment, the second mount (5) consists of angled profiles vertically oriented and outwardly facing the corners of the floating mount (2).

In Figure 6 an embodiment variant of the anti-vibration support system provided with, in this case, a fixed mount (1a) and a floating mount (2a) having side walls of adjustable length, is illustrated. Said side walls of adjustable length are formed, in the case of the fixed mount, by two end segments (11a) and an intermediate segment (11b); and in the case of the floating mount, by two end segments (21a) and an intermediate segment (21b).

The end segments (11a) and the intermediate segment (11b) of the fixed mount (1a) are joined with the possibility of relative displacement in the longitudinal direction and fixed in the position desired by means of screws (12) for tightening and fixing.

Similarly the end segments (21a) and the intermediate segment (21b) of the floating mount (2a) are joined with the possibility of relative displacement in the longitudinal direction and fixed in the position desired by means of screws (22) for tightening and fixing.

Once the nature of the invention as well as an example of preferred embodiment have been sufficiently described, it is stated for all pertinent purposes that the materials, form, size and arrangement of the elements described are susceptible to changes, provided these do not involve an alteration of the essential characteristics of the invention that are claimed subsequently.

## Claims

1. An anti-vibration support system; applicable to the protection of constructions or various equipment against forces and accelerations produced by an earthquake or vibrating waves of any nature, and to the protection of buildings against possible vibrations that said equipment may produce during its operation; comprising:
- a first fixed mount (1, 1a), anchored to a supporting surface and provided with side walls (11);
- a floating mount (2, 2a) having side walls (21) provided with at least first faces (211), internally or externally facing the side walls (11) of the first fixed mount (1, 1a); which floating mount (2) is mounted on anti-vibration bases (3) for limitation and damping of the vertical movement of the floating mount (2, 2a) and;
- first anti-impact side stop buffers (4) for limitation and damping of the horizontal movement of the floating mount (2), arranged horizontally between the first faces (211) of the side walls (21) of the floating mount (2) and the side walls (11) of the first fixed mount (1, 1a).

2. The system according to claim 1, **characterised in that** the anti-vibration bases (3) of the floating mount (2) comprise:
- a lower plate (31) provided with levelling legs (311) that have elastic studs (312) for contact on the fixed resting surface;
- an upper plate (32) fixed to the floating mount (2);
- at least one helical spring (33) mounted between the lower and upper plates (31, 32) and
- holding stems (34) for the upper and lower plates (32, 31) with the possibility of relative displacement.

3. The system, according to claim 2, **characterised in that** the anti-vibration bases (3) comprise, on the inside of the helical spring (33), pads (331) of stainless steel wire.

4. The system, according to claim 2; **characterised in that** at least one part of the anti-vibration bases (3) between the upper and lower plates (32, 31) incorporates a two-way metallic pad anti-resonance stop (35).

5. The system, according to claim 1, **characterised in that** the floating mount (2, 2a) has a ring configuration; its side walls (21) comprising second faces (212) oriented in directions opposite to the first faces (211).

6. The system, according to claim 4, **characterised in that** it comprises a second fixed mount (5) anchored to the supporting surface and provided with side walls facing the second faces (212) of the side walls (21) of the floating mount (2), and second anti-impact side stop buffers (6) arranged horizontally between the second faces (212) of the side walls (21) of the floating mount (2) and the side walls (11) of the second fixed mount (5).

7. The system, according to claim 1, **characterised in that** the fixed mount (1a) and the floating mount (2a) are formed in steel and comprise side walls of adjustable length, each formed by two end segments (11a, 11a) and (21a, 21a) and an intermediate segment (11b) and (21b) of adjustable length.
